Europäisches Patentamt

European Patent Office

Office européen des brevets

(11) Veröffentlichungsnummer: **0 225 993**
**A1**

(12) **EUROPÄISCHE PATENTANMELDUNG**

(21) Anmeldenummer: 86114594.4

(51) Int. Cl.⁴: **B62D 5/30** , B62D 5/14

(22) Anmeldetag: 21.10.86

(30) Priorität: 02.11.85 PCT/LU85/00582

(43) Veröffentlichungstag der Anmeldung:
24.06.87 Patentblatt 87/26

(84) Benannte Vertragsstaaten:
DE FR GB IT

(71) Anmelder: ZAHNRADFABRIK
FRIEDRICHSHAFEN AKTIENGESELLSCHAFT
Löwentaler Strasse 100 Postfach 2520
D-7990 Friedrichshafen 1(DE)

(72) Erfinder: Elser, Dieter
Jägerstrasse 10
D-7087 Essingen(DE)

(74) Vertreter: Raue, Reimund
Zahnradfabrik Friedrichshafen AG
Löwentaler Strasse 100 Postfach 2520
D-7990 Friedrichshafen 1(DE)

(54) **Hilfskraftlenkung für Kraftfahrzeuge.**

(57) Eine Hilfskraftlenkung weist zwei hydraulisch voneinander getrennte Lenkkreise auf. Der erste Lenkkreis umfaßt eine motorabhängige Pumpe, die über ein Drehschieberventil (6, 8) an eine in ein Lenkgehäuse (15) eingebaute Verstärkungseinrichtung (16, 17, 18) angeschlossen ist. Der zweite Lenkkreis besteht aus einer fahrgeschwindigkeitsabhängig angetriebenen Pumpe (28) die über ein weiteres Drehschieberventil (7, 9) mit einer Verstärkungseinrichtung (33, 34, 38, 40, 41) in Verbindung steht. Die beiden Drehschieberventile (6, 8 bzw. 7, 9) sind in Umfangsrichtung miteinander gekuppelt. Je nach Ausführung werden die Drehschieberventile beim Lenken nacheinander oder gleichzeitig in Anregelstellung verdreht. Fällt ein Lenkkreis, z. B. wegen Pumpenversagens aus, bleibt der andere Lenkkreis voll wirksam. Als zweite Verstärkungseinrichtung ist beispielsweise ein Drehverstärker (32) vorgesehen, der an der dem Lenkhebel (23) abgewandten Seite des Lenkgehäuses (15) angeflanscht ist. Zur Kraftverstärkung greift der Drehverstärker über an Kolben (33, 34) vorhandene zahnstangenartige Ansätze (35) in eine verzahnte Verlängerung (37) der Lenkwelle (21) ein.

FIG.2

## Hilfskraftlenkung für Kraftfahrzeuge

Eine Hilfskraftlenkung mit zwei hydraulisch voneinander getrennten Lenkkreisen nach dem Oberbegriff des Hauptanspruchs ist bereits aus der DE-PS 29 18 975 bekannt. Eine solche Zweikreislenkung besteht aus einem sogenannten Blocklenkgetriebe mit integriertem Arbeitskolben und einem weiteren separaten Arbeitszylinder, der an das Lenkgestänge angeschlossen ist. Jede dieser Verstärkungseinrichtungen wird über eine als Drehschieberventil ausgeführte Steuereinrichtung und eine zugehörige Pumpe mit Drucköl versorgt. Da die beiden Lenkkreise vollständig autark sind, wird beispielsweise beim Ausfall einer Pumpe die Lenkfunktion über den noch intakten Lenkkreis, jedoch bei erhöhtem Handkraftanteil, weiter aufrechterhalten.

Bei einem Einbau solcher Zweikreislenkungen, insbesondere in Fahrzeuge mit nur einer Lenkachse, ergeben sich oft schwer zu lösende Raumprobleme hinsichtlich der Unterbringung des separaten Arbeitszylinders. Die Notwendigkeit von stabilen Anlenkpunkten am Fahrzeugrahmen und die Installation von verhältnismäßig langen Druckschläuchen für den separaten Arbeitszylinder erfordern einen zusätzlichen finanziellen Mehraufwand.

Der Erfindung liegt daher die Aufgabe zugrunde, eine Zweikreislenkung zu schaffen, die sehr kompakt aufgebaut ist, und die mit nur geringstem Einbauaufwand im Fahrzeug unterzubringen ist. Diese Aufgabe ist durch die Merkmale der Ansprüche 1 bis 7 gelöst.

Nach dem Hauptmerkmal der Erfindung ist die Lenkwelle auf der dem Lenkhebel abgewandten Gehäuseseite mit einer Verlängerung versehen, die aus dem Lenkgetriebegehäuse herausragt. Die zweite Verstärkungseinrichtung ist an dieser Gehäuseseite an einer Flanschfläche des Lenkgetriebegehäuses angebaut und greift zur Kraftverstärkung an der Verlängerung der Lenkwelle an.

Dadurch, daß die zweite Verstärkungseinrichtung seitlich mit dem Blocklenkgetriebe verschraubt ist, ergibt sich ein sehr kompakter Aufbau für eine Zweikreislenkung. Das Gehäuse der zweiten Verstärkungseinrichtung ragt dabei nur geringfügig über die Umrisse des Blocklenkgetriebes hinaus. Zusätzliche Befestigungsmittel sowie beschädigungsanfällige Druckschläuche können daher entfallen.

Durch den Anbau der zweiten Verstärkungseinrichtung unmittelbar am Lenkgetriebe lassen sich die bei separat eingebauten Arbeitszylindern infolge ihrer flexiblen Schläuche durch Elastizitäten auftretenden Schwingungsprobleme vermeiden.

Es ist weiter von Vorteil, daß die Möglichkeit erhalten bleibt, das Blocklenkgetriebe in seiner Ausgangsform ohne große Änderung je nach Einbaufall im Einkreis-oder im Zweikreisbetrieb mit separatem Arbeitszylinder zu verwenden. Hierzu muß lediglich die geeignete Lenkwelle eingebaut werden.

Nach Anspruch 2 wird die gedrungene Bauweise der Zweikreisanlage außerdem dadurch erzielt, daß die erste und die zweite Verstärkungseinrichtung über konzentrisch zur Lenkspindel angeordnete Drehschieberventile ansteuerbar sind.

Nach Anspruch 3 kann die Verstärkungseinrichtung als Drehverstärker mit einem über einen zahnstangenartigen Ansatz in die Verlängerung der Lenkwelle eingreifenden Kolben verwirklicht werden. Hierbei ist eine Ausführungsform nach Anspruch 4 vorteilhaft, die zwei in einer gemeinsamen Zylinderbohrung gegenläufig verschiebbare Kolben aufweist. Ein solcher Drehverstärker ist preisgünstig in der Herstellung mit einer hohen Kraftverstärkung im Verhältnis zum Bauvolumen.

Nach Anspruch 5 kann die Verstärkungseinrichtung auch als ein-oder mehrflügeliger Rotorverstärker ausgeführt sein. Dieser Rotorverstärker zeichnet sich besonders durch seine flache Bauweise aus.

In einer weiteren Ausführungsform nach Anspruch 6 ist der Drehverstärker als Doppelkolbenverstärker mit zwei parallel angeordneten Zylinderbohrungen ausgeführt, wobei jede Zahnstange an ihren Enden zwei Kolben trägt. Diese Ausgestaltung erlaubt eine noch flachere Bauweise als mit zwei in einer Zylinderbohrung gegenläufig verschiebbaren Kolben und die Übertragung hoher Lenkhilfskräfte. Außerdem erlaubt der Doppelkolbenverstärker eine variablere Dimensionierung, da ein kleinerer Teilkreisdurchmesser der Verzahnung auf der Lenkwellenverlängerung möglich ist.

Nach Anspruch 7 kann der Drehverstärker auch rechteckförmige Kolben aufweisen. Durch diese Maßnahme ist eine sehr flache Bauweise zu erzielen.

Die Ausführungsbeispiele der Erfindung sind nachfolgend anhand der Zeichnung näher erläutert. Es zeigen:

Fig. 1 einen Längsschnitt durch eine Zweikreislenkung in Blockausführung,

Fig. 2 eine Ansicht gesehen in Richtung des Pfeiles II der Fig. 1 bei teilweise weggebrochenem Gehäuse mit der am Blocklenkgetriebe angebauten als Drehverstärker ausgeführten, zweiten Verstärkungseinrichtung,

Fig. 3 eine Draufsicht auf den vom Blocklenkgetriebe getrennten Drehverstärker in Richtung des Pfeiles III von Fig. 2 bei teilweise weggebrochenem Gehäuse,

Fig. 4 eine Ausführungsform der Verstärkungseinrichtung als Rotorverstärker in der Draufsicht bei fortgelassenem Gehäusedeckel,

Fig. 5 einen Längsschnitt durch die Ausführung als Doppelkolbenverstärker,

Fig. 6 einen Längsschnitt durch eine weitere Ausführungsform als Drehverstärker mit rechteckförmigen Kolbenflächen und

Fig. 7 einen Schnitt nach der Linie VII-VII in Fig. 6.

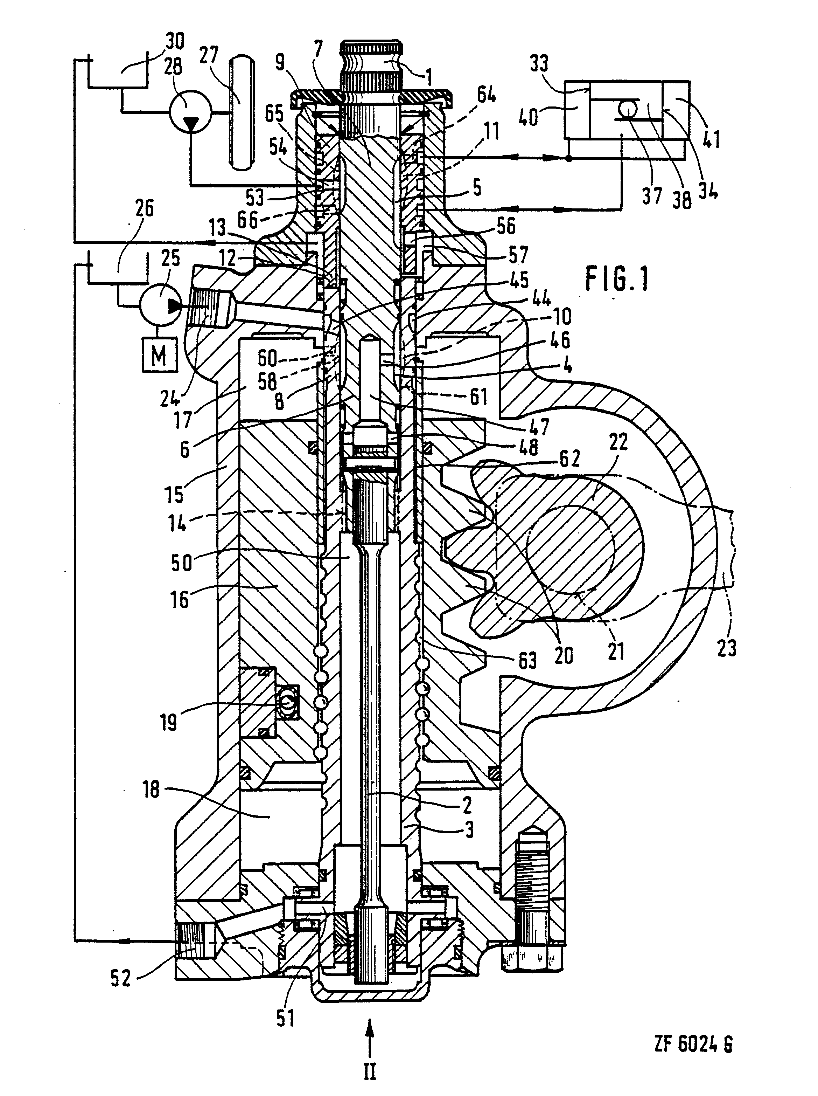

Das Blocklenkgetriebe nach Fig. 1 entspricht in der Grundkonzeption weitgehend der in der Beschreibungseinleitung angeführten DE-PS 29 18 975, so daß nachstehend nur auf die für die Funktion wichtigen Baumerkmale eingegangen wird. Eine mit einem nicht dargestellten Lenkhandrad verbundene Lenkspindel 1 steht über einen Drehstab 2 elastisch mit einer Gewindespindel 3 in Verbindung. In die Lenkspindel sind axiale Steuernuten, zum Beispiel 4 und 5, eingearbeitet, die Bestandteile eines Ventilschiebers 6 und 7 sind. Der eine Ventilschieber 6 wirkt mit einer mit der Gewindespindel 3 einstückig gefertigten Steuerbuchse 8 mit axialen Steuernuten, zum Beispiel 10, zusammen. Der andere Ventilschieber 7 wirkt mit einer mit der Steuerbuchse 8 gekuppelten Steuerbuchse 9 mit axialen Steuernuten, zum Beispiel 11, zusammen. Die Ventilschieber und Steuerbuchsen stellen zwei axial hintereinander angeordnete Drehschieberventile dar, nämlich ein erstes Drehschieberventil 6, 8 und ein zweites Drehschieberventil 7, 9. Die Verbindung der beiden Steuerbuchsen 8 und 9 zur Drehmitnahme erfolgt durch eine spielfrei in eine Aussparung 12 der Steuerbuchse 8 hineinragende Nase 13 an der Steuerbuchse 9. Eine Keilverzahnung 14 begrenzt das Steuerspiel zwischen der Lenkspindel 1 und der Gewindespindel 3. Innerhalb dieses Steuerspiels wird der Druck durch die beiden Drehschieberventile 6, 8 und 7, 9 angeregelt. Durch das erste Drehschieberventil 6, 8 wird eine innerhalb eines Lenkgehäuses 15 vorgesehene erste Verstärkungseinrichtung angesteuert, die aus einem Arbeitskolben 16 und Druckräumen 17 und 18 besteht. Der Arbeitskolben 16 greift über eine Kugelkette 19 in die Gewindespindel 3 ein. Weiter steht der Arbeitskolben 16 über eine Verzahnung 20 mit einem auf einer Lenkwelle 21 angeordneten Lenksegment 22 im Eingriff. Die Lenkwelle 21 steht über einen Lenkhebel 23 und ein nicht dargestelltes Lenkgestänge mit den gelenkten Rädern in Verbindung.

Das die erste Verstärkungseinrichtung 16, 17, 18 ansteuernde Drehschieberventil 6, 8 steht über einem Gehäuseanschluß 24 mit einer von einem Fahrzeugmotor M angetriebenen Pumpe 25 in Verbindung, die das Drucköl aus einem Behälter 26 ansaugt.

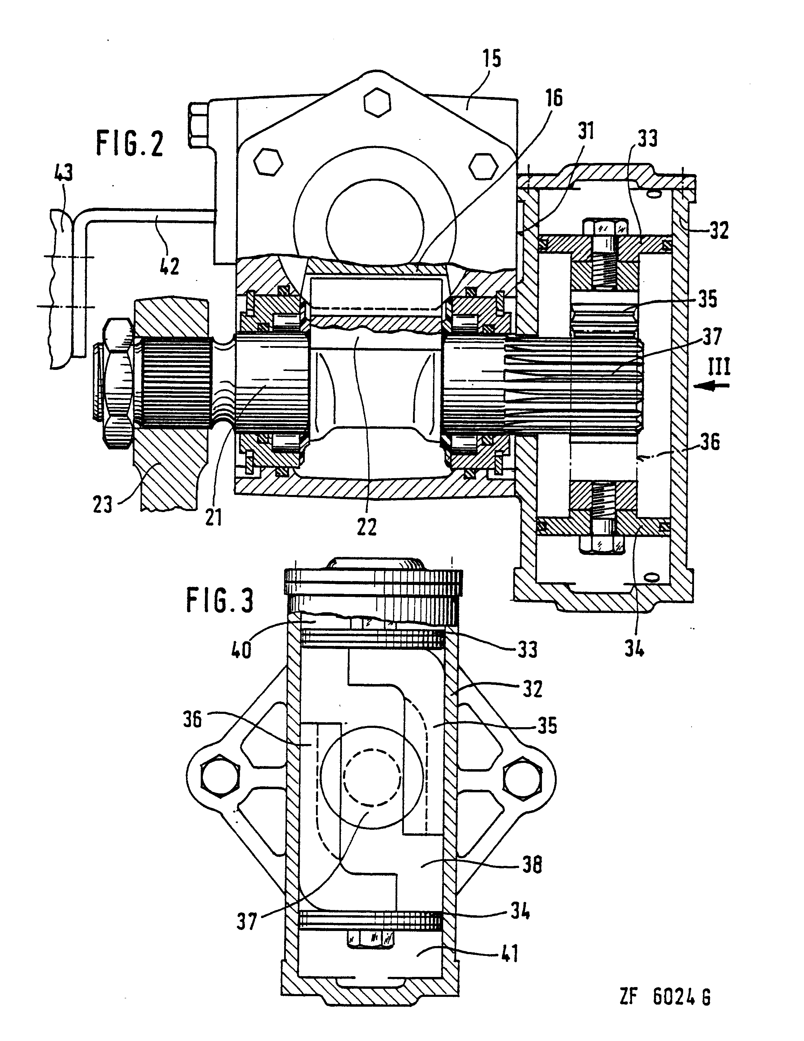

Das zweite Drehschieberventil 7, 9 ist, wie durch ein Rad 27 angedeutet, an eine in Abhängigkeit von der Fahrgeschwindigkeit angetriebenen Pumpe 28 mit einem Behälter 30 angeschlossen. Nach der Erfindung dient das zweite Drehschieberventil 7, 9 zum Ansteuern einer zweiten Verstärkungseinrichtung (Fig. 2 und 3), die auf der dem Lenkhebel 23 abgewandten Seite des Lenkgehäuses 15 an einer Flanschfläche 31 angebaut ist. Diese Verstärkungseinrichtung besteht aus einem zylindrischen Gehäuse 32, in welchem zwei gegenläufig bewegbare Kolben 33 und 34 angeordnet sind. Diese Kolben 33 und 34 sind mit zahnstangenartigen Ansätzen 35 bzw. 36 versehen, die in eine verzahnte Verlängerung 37 der Lenkwelle 21 eingreifen. Die Kolben 33 und 34 schließen für die eine Lenkrichtung einen beaufschlagbaren Druckraum 38 ein. Zwei außenliegende Druckräume 40 und 41 sind in der anderen Lenkrichtung gemeinsam beaufschlagt. -Das Lenkgehäuse 15 ist durch einen Winkel 42 am Fahrzeugrahmen 43 befestigt.

In der Neutralstellung der beiden Drehschieberventile 6, 8 und 7, 9 ergibt sich nach Fig. 1 folgender Ölfluß:

Das von der Pumpe 25 geförderte Drucköl strömt über den Gehäuseanschluß 24, eine Ringnut 44 und über Bohrungen 45 der Steuerbuchse 8 in die axialen Steuernuten 4 des Ventilschiebers 6. Von dort gelangt das Drucköl über eine Querbohrung 46, eine zentrische Bohrung 47, weitere Querbohrungen 48 und über die mit Spiel ausgeführte Keilverzahnung 14 in einen Hohlraum 50 der Gewindespindel 3. Weiter gelangt das Drucköl - schließlich über Bohrungen 51 und einen Auslaß 52 wieder in den Behälter 26. Das gleichzeitig von der Pumpe 28 geförderte Drucköl gelangt über einen Ringkanal 53 und mehrere Bohrungen 54 in der Steuerbuchse 9 in die axialen Steuernuten 5 des Ventilschiebers 7. Von dort strömt das Drucköl über eine Querbohrung 56 in der Steuerbuchse 9 und einen Ringraum 57 zurück zum Behälter 30.

Die Steuernutensysteme der beiden Drehschieberventile sind vorteilhaft so aufgeführt, daß bei einer Lenkbewegung zunächst das erste Drehschieberventil 6, 8 und nachfolgend das zweite Drehschieberventil 7, 9 anspricht. Dies kann zum Beispiel dadurch erreicht werden, daß die axialen Steuernuten des zweiten Drehschieberventils 7, 9 geringfügig breiter ausgeführt sind als die des ersten Drehschieberventils 6, 8. Das zweite Drehschieberventil 7, 9 führt also in beiden Lenkrichtungen erst einen gewissen Leerweg aus, bis Drucköl angesteuert wird.

Wie bereits angedeutet, wird bei einer Lenkbewegung zunächst das Drehschieberventil 6, 8 ausgesteuert. Das von der Pumpe 21 geförderte Öl strömt unter Druck über axiale Steuernuten 58 und Bohrungen 60 in der Steuerbuchse 8 in den Druckraum 17 oder über die anderen axialen Steuernuten 10, Bohrungen 61, einen Ringkanal 62 und über ein Gewinde 63 der Gewindespindel 3 in den Druckraum 18. Der die motorbetriebene Pumpe 25, den Drehschieber 6, 8 und den Kraftverstärker 16, 17, 18 umfassende erste Lenkkreis ist dabei im normalen Fahrbetrieb wirksam. Das hydraulische Arbeitsvermögen dieses Lenkkreises ist dabei so ausgelegt, daß auch bei Rangiervorgängen, die eine hohe Lenkkraft erfordern, eine entsprechend hohe Hilfskraft zur Verfügung steht.

Bei einem plötzlichen Ausfall des Fahrzeugmotors M oder auch nur der Pumpe 25 während der Fahrt wird der Lenkwiderstand am Lenkhandrad größer. Dies bedeutet eine noch stärkere Relativverdrehung der Lenkspindel 1 gegenüber der Gewindespindel 3. Dadurch wird auch das Drehschieberventil 7, 9 in Wirkstellung verdreht. Das von der achsgetriebenen Pumpe 28 gelieferte Drucköl gelangt über die axialen Steuernuten 11 und Bohrungen 64 in der Steuerbuchse 9 in die beiden Druckräume 40 und 41 oder über weitere axiale Steuernuten 65 und Bohrungen 66 in den inneren Druckraum 38 des Drehverstärkers. Die beiden Arbeitskolben 33 und 34 verschieben sich entsprechend der Lenkrichtung aufeinander zu oder voneinander weg.

Es ist selbstverständlich auch möglich, die Steuernutensysteme der beiden Drehschieberventile so auszuführen, daß diese bei völliger Trennung der beiden Lenkkreise den Druck in den beiden Verstärkungseinrichtungen immer gleichzeitig anregeln. Der erste Lenkkreis muß jedoch auch hier so ausgelegt sein, daß er hohe Lenkkräfte alleine aufbringen kann.

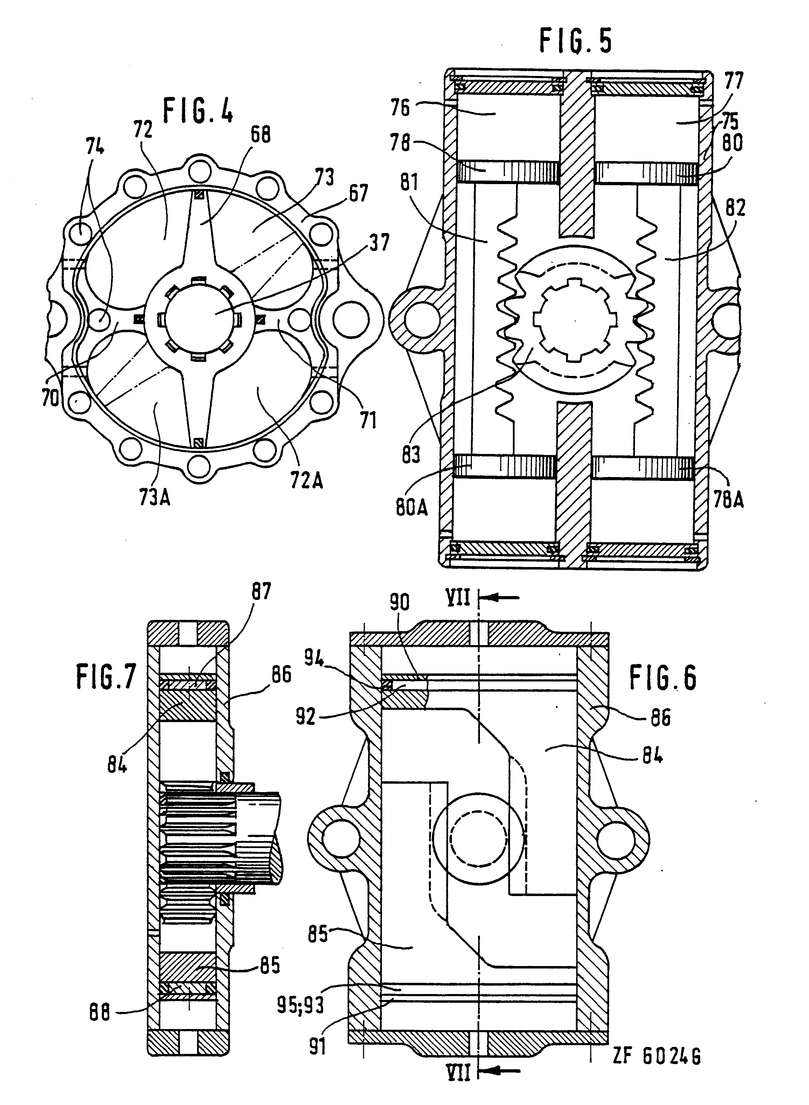

Anstelle des mit den gegenläufigen Kolben 33 und 34 arbeitenden Drehverstärkers nach Fig. 2 und 3 ist es auch möglich einen Rotorverstärker entsprechend Fig. 4 an der Flanschfläche 31 (Fig. 2) anzubauen. Dieser besteht aus einem zylindrischen Gehäuse 67, in welchem ein auf die Verlängerung 37 aufgekeilter zweiflügeliger Rotor 68 eine winkelbegrenzte Drehbewegung in beiden Drehrichtungen ausführt. Durch Gehäusestege 70 und 71 ist ein Innenraum in Druckräume 72, 72A und 73, 73A aufgeteilt. Zur Lenkkraftverstärkung werden die jeweils diagonal gegenüberliegenden Druckräume 72, 72A bzw. 73 73A mit Drucköl angesteuert. Bohrungen 74 dienen zur Befestigung eines Gehäusedeckels mit Schraubenbolzen.

Fig. 5 zeigt die Ausführungsform einer Verstärkungseinrichtung als Doppelkolbenverstärker. In einem Gehäuse 75 sind parallele Zylinderbohrungen 76 und 77 zur Aufnahme von Kolben 78, 80A bzw. 80, 78A vorgesehen. Die Kolben 78, 80A und 80, 78A sind jeweils mit den Enden einer Zahnstange 81 bzw. 82 verbunden, die beide in eine auf der Verlängerung 37 befestigtes Ritzel 83 eingreifen. Durch Druckbeaufschlagung der einander diagonal gegenüberliegenden Flächen der Kolben erhält man die gewünschte Lenkkraftverstärkung.

Fig. 6 und 7 zeigen die sehr flach bauende Ausführungsform eines Drehverstärkers ähnlich der Fig. 3, jedoch mit rechteckförmigen Kolben 84 und 85 und zugehörigem rechteckförmigen Gehäuse 86. Die Kolben sind beispielsweise auf ihrer Stirnseite mit Absätzen 87 und 88 versehen. An den Absätzen 87, 88 liegen mit den Kolben verschraubte Platten 90 und 91 an, durch welche Nuten 92 und 93 für die Aufnahme von O-Ringen 94 und 95 geschaffen werden.

Bezugszeichen

    1 Lenkspindel
    2 Drehstab
    3 Gewindespindel
    4 axiale Steuernuten
    5 axiale Steuernuten
    6 Ventilschieber
    7 Ventilschieber
    8 Steuerbuchse
    9 Steuerbuchse
  10 axiale Steuernuten
  11 axiale Steuernuten
  12 Aussparung
  13 Nabe
  14 Keilverzahnung
  15 Lenkgehäuse
  16 Arbeitskolben
  17 Druckraum
  18 Druckraum
  19 Kugelkette
  20 Verzahnung
  21 Lenkwelle
  22 Lenksegment
  23 Lenkhebel
  24 Gehäuseanschluß
  25 Pumpe
  26 Behälter
  27 Rad
  28 Pumpe
  29 -

# 0 225 993

30 Behälter
31 Flanschfläche
32 Gehäuse
33 Kolben
34 Kolben
35 zahnstangenartiger Ansatz
36 zahnstangenartiger Ansatz
37 verzahnte Verlängerung von 21
38 Druckraum
39 -
40 Druckraum
41 Druckraum
42 Winkel
43 Fahrzeugrahmen
44 Ringnut
45 Bohrungen
46 Querbohrung
47 zentrische Bohrung
48 Querbohrungen
49 -
50 Hohlraum
51 Bohrungen
52 Auslaß
53 Ringkanal
54 Bohrungen
55 axiale Steuernuten
56 Querbohrung
57 Ringraum
58 axiale Steuernuten
59 -
60 Bohrungen
61 Bohrungen
62 Ringkanal
63 Gewinde
64 Bohrungen
65 Steuernuten
66 Bohrungen
67 zylindrische Gehäuse
68 Rotor
69 -
70 Gehäusesteg
71 Gehäusesteg
72, 72A Druckräume
73, 73A Druckräume
74 Bohrungen
75 Gehäuse
76 Zylinderbohrung
77 Zylinderbohrung
78, 78A Kolben
79 -
80, 80A Kolben
81 Zahnstange
82 Zahnstange
83 Ritzel
84 rechteckförmiger Kolben
85 rechteckförmiger Kolben
86 rechteckförmiges Gehäuse
87 Absatz

88 Absatz
89 -
90 Platte
91 Platte
92 Nut
93 Nut
94 O-Ring
95 O-Ring
M Fahrzeugmotor

**Ansprüche**

1. Hilfskraftlenkung für Kraftfahrzeuge mit folgenden Merkmalen:
-In einem Lenkgetriebegehäuse ist eine mit einem Arbeitskolben einer Verstärkungseinrichtung in Eingriff stehende Gewindespindel angeordnet;
-der Arbeitskolben steht über eine Verzahnung mit einem Lenksegment einer einen Lenkhebel tragenden Lenkwelle in Verbindung;
-die Gewindespindel weist in ihrem Innenraum einen Drehstab auf, der diese mit der Lenkspindel verbindet;
-durch eine Relativverdrehung der Lenkspindel gegenüber der Gewindespindel wird ein Drucköistrom über einen eine erste Steuereinrichtung enthaltenden ersten Lenkkreis dem Arbeitskolben und über eine eine weitere Steuereinrichtung enthaltenden, vom ersten Lenkkreis getrennten zweiten Lenkkreis, einer zweiten Verstärkungseinrichtung zugesteuert,
**gekennzeichnet** durch folgende Merkmale:
-Die Lenkwelle (21) ist auf der dem Lenkhebel (23) abgewandten Gehäuseseite mit einer Verlängerung (37) versehen, die aus dem Lenkgetriebegehäuse - (15) herausragt;
-die zweite Verstärkungseinrichtung (32, 33, 34) ist an einer Flanschfläche (31) angebaut und greift zur Kraftverstärkung an der Verlängerung (37) der Lenkwelle (21) an.

2. Hilfskraftlenkung nach Anspruch 1, dadurch **gekennzeichnet**, daß die erste (15, 16) und die zweite Verstärkungseinrichtung (32, 33, 34) über konzentrisch zur Lenkspindel (1), hintereinander angeordnete Drehschieberventile (6, 8 bzw. 7, 9) ansteuerbar sind.

3. Hilfskraftlenkung nach Anspruch 1, dadurch **gekennzeichnet**, daß die Verstärkungseinrichtung als Drehverstärker mit einem über einen zahnstangenartigen Ansatz (35, 36) in die Verlängerung - (37) der Lenkwelle (21) eingreifenden Kolben (33, 34) ausgeführt ist.

4. Hilfskraftlenkung nach Anspruch 3, dadurch **gekennzeichnet**, daß der Drehverstärker zwei in einer gemeinsamen Zylinderbohrung verschiebbare Kolben (33, 34) enthält (Fig. 3).

5. Hilfskraftlenkung nach Anspruch 1, dadurch **gekennzeichnet**, daß die Verstärkungseinrichtung als ein-oder mehrflügeliger Rotorverstärker (67, 68) ausgeführt ist (Fig. 4).

6. Hilfskraftlenkung nach Anspruch 3, dadurch **gekennzeichnet**, daß der Drehverstärker als Doppelkolbenverstärker mit zwei parallel angeordneten Zylinderbohrungen ausgeführt ist, wobei jede Zahnstange (81, bzw. 82) an ihren Enden Kolben - (78, 80A bzw. 80, 78A) trägt (Fig. 5).

7. Hilfskraftlenkung nach Anspruch 3, dadurch **gekennzeichnet**, daß der Drehverstärker rechteckförmige Kolben (84, 85) aufweist (Fig. 6, 7).

FIG.1

ZF 6024 G

FIG.2

FIG.3

ZF 6024 6

FIG.4

FIG.5

FIG.7

FIG.6

ZF 6024 6

<table>
<tr><td>Europäisches Patentamt</td><td>EUROPÄISCHER RECHERCHENBERICHT</td><td>Nummer der Anmeldung<br>EP 86 11 4594</td></tr>
</table>

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 154 388 (TRW)<br>* Zusammenfassung; Figur 1 * | 1-4,7 | B 62 D 5/30<br>B 62 D 5/14 |
| Y | US-A-2 957 361 (HERBENAR)<br>* Spalte 1, Zeilen 25-39; Figuren 1-4 * | 1-4,7 | |
| A | US-A-1 817 903 (AIKMAN)<br>* Figuren 8,10 * | 1,5 | |
| A | GB-A- 767 208 (BURMAN)<br>* Figuren 1-3 * | 1,5 | |

RECHERCHIERTE SACHGEBIETE (Int. Cl.4)

B 62 D 5/00
F 15 B 18/00
F 15 B 15/00

Der vorliegende Recherchenbericht wurde für alle Patentansprüche erstellt.

| Recherchenort | Abschlußdatum der Recherche | Prüfer |
|---|---|---|
| BERLIN | 22-01-1987 | KRIEGER P O |